# EUROPÄISCHE PATENTSCHRIFT

(11) **EP 1 397 425 B1**
(45) Veröffentlichungstag und Bekanntmachung des Hinweises auf die Patenterteilung: **11.07.2007**
(21) Anmeldenummer: 02735304.4
(22) Anmeldetag: 25.04.2002
(51) Int. Cl.: C08K 5/00, C08G 65/332

(54) **STOFFMISCHUNG ZUR UV-STABILISIERUNG VON KUNSTSTOFFEN UND HERSTELLUNG DAVON**
MIXTURE OF SUBSTANCES FOR THE UV-STABILISATION OF SYNTHETIC MATERIALS AND THE PRODUCTION THEREOF
MELANGES DE SUBSTANCES POUR STABILISER LES UV DE MATIERES PLASTIQUES ET LEUR PRODUCTION

(30) Priorität: 27.04.2001 DE 10120838
(43) Veröffentlichungstag der Anmeldung: 17.03.2004
(73) Patentinhaber: BASF Aktiengesellschaft, 67056 Ludwigshafen (DE)
(72) Erfinder: MALZ, Hauke, 49356 Diepholz (DE); BRAND, Johann, Diedrich, 49448 Lemförde (DE); FLUG, Thomas, 49419 Wagenfeld (DE); HACKL, Christa, 49152 Bad Essen (DE)
(86) Internationale Anmeldenummer: PCT/EP2002/004597
(87) Internationale Veröffentlichungsnummer: WO 2002/088236

(56) Entgegenhaltungen:
- EP-A- 0 057 160
- WO-A-94/22945
- DE-A- 3 725 926
- US-A- 4 338 247
- US-A- 4 925 888
- US-A- 5 821 292

## Beschreibung

Die Erfindung betrifft eine Stoffmischung zur UV-Stabilisierung von Kunststoffen, insbesondere von thermoplastischen Polyurethanen, mit einem zahlenmittleren Molekulargewicht zwischen 500 und 15000 g/mol, wobei das zahlenmittlere Molekulargewicht ungleich des gewichtsmittleren Molekulargewichts ist, erhältlich durch A) Umsetzung von UV-Absorbern mit Diolen und/oder B) Umsetzung von UV-Absorbern mit einem Polyol, sowie die Herstellung der Stoffmischung und deren Verwendung zur Herstellung und Verwendung von Polyurethanen.

Thermoplastisches Polyurethan (TPU) wird im allgemeinen mit Thermo- und UV-Stabilisatoren stabilisiert, um die Abnahme der mechanischen Eigenschaften und die Verfärbung der Produkte aufgrund oxidativer Schädigung zu minimieren. Eine Gruppe der UV-Stabilisatoren sind die UV-Absorber, die das energiereiche UV-Licht absorbieren und die Energie dissipieren. Gängige UV-Absorber, welche in der Technik Verwendung finden, gehören z.B. zur Gruppe der Zimtsäureester, der Diphenylcyanacrylate., Diarylbutadiene sowie der Benzotriazole.

WO 96/15184 beschreibt die Verwendung von Arylacrylsäureestern als Lichtschutzmittel und Stabilisatoren für nicht lebendes, organische Material.

DE-A-34 24 555 beschreibt die Herstellung und Verwendung zur UV-Stabilisierung von thermoplastischen Kunststoffen von Malonsäurepolyestern und Malonsäurepolyesteramiden.

EP-A-826 725 offenbart stabilisierte Polyurethane, die als Stabilisatoren Diglycidylterephthalat oder Triglycidyltrimellitat in Kombination mit UV-Filtern enthalten.

EP-A-698637 beschreibt Benzotriazole, die an 5-Position substituiert sind und als UV-Absorber für Polyurethane und Polyharnstoffe, gegebenenfalls in Kombination mit HALS-Aminen als Stabilisatoren, Verwendung finden.

Auch wenn diese derzeit erhältlichen Produkte hinsichtlich ihrer Absorptionseigenschaften bereits optimiert sind, so bestehen bezüglich ihrer physikalischen Eigenschaften und ihrer Kompatibilität zum TPU noch erhebliche Defizite. So sind viele kommerziell erhältliche UV-Absorber niedermolekular mit einer Molmasse kleiner 400 g/mol. Dies führt dazu, dass sich der UV-Absorber mit der Zeit aus dem zu stabilisierenden Kunststoff verflüchtigt. Durch den Verlust an UV-Absorber verliert der Kunststoff auch seinen Schutz vor UV-induzierter Schädigung.

Oft wird daher versucht, die Molmasse des UV-Absorbers durch Oligomerisierung anzuheben. Häufig erhält man dabei aber kristalline, schlechtlösliche UV-Absorber, die aus dem TPU ausmigrieren und an der Oberfläche durch einen deutlichen Belag sichtbar werden, was das optische Erscheinungsbild des Produktes beeinträchtigt und zu einem Verlust der Absorbereigenschaften führt, da die Wirkstoffgruppe eliminiert wird.

Aufgabe der vorliegenden Erfindung war es somit, ein Mittel zur UV-Stabilisierung von Kunststoffen zu entwickeln, das einfach, kontrollierbar, homogen und reproduzierbar in Kunststoffe, bevorzugt in thermoplastische Kunststoffe, insbesondere thermoplastische Polyurethane eingearbeitet werden kann. Zudem sollte dieses Mittel insbesondere in thermoplastischen Polyurethanen weitgehend fogging-, migrations- und ausblühfrei bei allen Temperaturen sein, d.h. einen deutlich geringeren Verlust an UV-absorbierender Komponente durch Verdampfen aus dem TPU, sowie eine deutlich geringere Belagbildung auf der Oberfläche der thermoplastischen Polyurethane zeigen. Eine weitere Aufgabe der Erfindung war es, ein Mittel bereit zu stellen, das neben einer UV-Stabilisierung auch eine thermische Stabilisierung von Kunststoffen, insbesondere von thermoplastischen Polyurethanen bewirkt, wobei beide stabilisierende Wirkungen optimal aufeinander abgestimmt werden sollen, um bezüglich beider Eigenschaften eine besonders effektive Wirkung bei gleichzeitig möglichst geringem Materialeinsatz zu erreichen.

Die Aufgabe konnte durch eine, bevorzugt amorphe oder flüssige, Stoffmischung zur UV-Stabilisierung, mit einem zahlenmittleren Molekulargewicht zwischen 500 und 15000 g/mol, wobei das zahlenmittlere Molekulargewicht ungleich des gewichtsmittleren Molekulargewichts ist. Die Stoffe der Mischung weisen ein uneinheitliches Molekulargewicht auf und liegen in Form einer Molekulargewichtsverteilung vor. Es hat sich gezeigt, das derartige Stoffmischungen unerwartet vorteilhaft in thermoplastische Kunststoffe zur UV-Stabilisierung eingearbeitet werden können.

Gegenstand der Erfindung ist daher eine Stoffmischung (I) mit einem zahlenmittleren Molekulargewicht zwischen 500 und 15000 g/mol, wobei das zahlenmittlere Molekulargewicht ungleich des gewichtsmittleren Molekulargewichts ist, erhältlich durch
A) Umsetzung von UV-Absorbern (II), oder einer Mischung von UV-Absorbern (II) und Stabilisatoren für Kunststoffe (III), mit Diolen (IV), wobei mindestens ein Teil der UV-Absorber (II) oder der Stabilisatoren (III) mindestens zwei gegenüber Diolen (IV) reaktive Gruppen aufweist, und/oder
B) Umsetzung von UV-Absorbern (II), oder einer Mischung von UV-Absorbern (II) und Stabilisatoren für thermoplastische Kunststoffe (III), mit einem Polyol (V).

Ferner ist Gegenstand der Erfindung ein Verfahren zur Herstellung der erfindungsgemäßen Stoffmischung, dadurch gekennzeichnet, dass man UV-Absorber (II) oder eine Mischung von UV-Absorbern (II) und Stabilisatoren (III) mit Diolen (IV), umsetzt, wobei mindestens ein Teil der UV-Absorber (II) oder der Stabilisatoren (III) mindestens zwei gegenüber Diolen (IV) reaktive Gruppen aufweist und ein Verfahren, dadurch gekennzeichnet, dass man einen UV-Absorber (II), oder eine Mischung von UV-Absorbern (II) und Stabilisatoren (III), mit einem Polyol (V) umsetzt, wobei das Polyol bevorzugt ein zahlenmittleres Molekulargewicht von 75 F g/mol bis 250 F g/mol aufweist und F die Zahl der funktionellen Gruppen im Polyol darstellt.

Ein weiterer Gegenstand ist die Verwendung der erfindungsgemäßen Stoffmischung zur UV-Stabilisierung von Kunststoffen, bevorzugt von thermoplastischen Kunststoffen, besonders bevorzugt von thermoplastischen Polyurethanen.

Ebenfalls ist Gegenstand dieser Erfindung ein Verfahren zur Herstellung von Polyurethanen, bevorzugt thermoplastischen Polyurethanen, wobei zur UV-Stabilisierung die erfindungsgemäße Stoffmischung verwendet wird.

Schließlich sind Gegenstand der Erfindung Polyurethane, die gemäß vorstehend beschriebenen Verfahren herstellbar sind.

Die Begriffe Stoffmischung (I), UV-Absorber (II), Stabilisator (III), Diol (IV) und Polyol (V) sollen nachstehend erläutert werden.

Unter UV-Absorber (II) werden im allgemeinen Verbindungen mit Absorptionsvermögen für Ultraviolettstrahlung, bevorzugt durch strahlungslose Desaktivierung, verstanden. Beispiele hierfür sind Derivate des Benzophenons, in 3-Stellung phenyl-substituierte Acrylate, bevorzugt mit Cyanogruppen in 2-Stellung, Derivate der Diarylbutadiene, Derivate des Benzotriazols, Salicylate, organische Nickel-Komplexe und UV-absorbierende Naturstoffe wie Umbelliferon.

Die UV-Absorber (II) der vorliegenden Erfindung weisen mindestens eine Gruppe auf, die gegenüber dem Diol (IV) oder dem Polyol(V) reaktiv ist, beispielsweise eine Carboxyl-, Ester-, Thioester- und Amidgruppen, und über die eine kovalente Bindung an das Diol (IV) oder das Polyol (V) erfolgen kann.

Bevorzugt verwendet werden als UV-Absorber (II) Verbindungen gemäß den allgemeinen Formeln II.1 bis II.5, 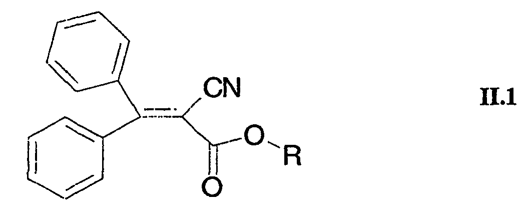 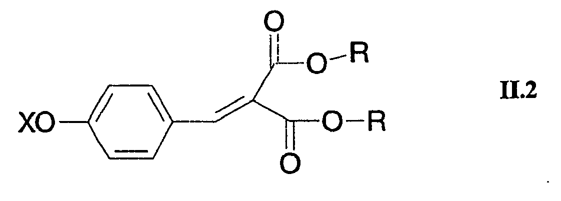 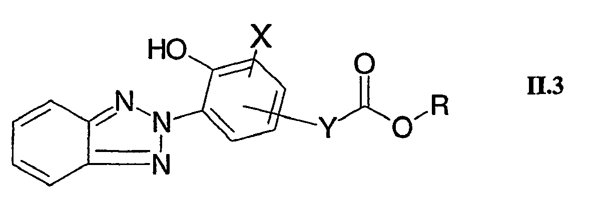 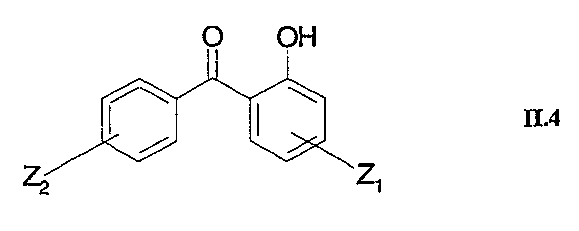 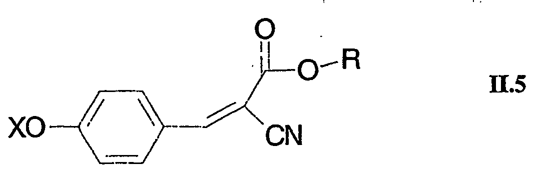 in denen X ein Wasserstoffatom, einen linearen oder verzweigten C₁-C₂₀-Alkylrest, einen C₅-C₁₂-Cycloalkylrest, gegebenenfalls mono-, di- oder trisubstituiert mit einem C₁-C₂₀-Alkylrest oder Phenylalkylrest, oder ein gehindertes Amin bedeutet,

R ein Wasserstoffatom, einen linearen oder verzweigten C₁-C₁₀-Alkylrest, bevorzugt C₁-C₂-Alkylrest, C₁-C₁₀-Alkoxyalkylrest oder C₁-C₁₀-Alkenylrest bedeutet und Y eine kovalente Bindung oder ein linearer oder verzweigter C₁-C₁₂-Alkylenrest ist und Z₁ und Z₂ lineare, verzweigte oder cyclische, gesättigte oder ungesättigte Kohlenwasserstoffreste mit 1 bis 10 Kohlenstoffatomen bedeuten, wobei bevorzugt mindestens einer der Reste mit einer Gruppe der Formel -COOR oder -CONHR substituiert ist, und wobei R wie vorstehend definiert ist.

Besonders bevorzugt werden UV-Stabilisatoren (II) gemäß den allgemeinen Formeln 11.1 und/oder 11.3, insbesondere gemäß der Formel 11.3 verwendet. Weiterhin können bevorzugt UV-Stabilisatoren (II) verwendet werden, die in US 5,508,025 (insbesondere auf Spalten 5 und 6) offenbart sind. Ebenfalls können Gemische der genannten UV-Stabilisatoren vorteilhaft eingesetzt werden, da dadurch verschiedene Bereiche des UV-Lichtes absorbiert werden können.

Im Rahmen dieser Anmeldung umfasst der Begriff Stabilisator (III) die für thermoplastische Kunststoffe allgemein bekannten Stabilisatoren, wie beispielsweise Phosphite, Thiosynergisten, HALS-Verbindungen, Quencher, und sterisch gehinderte Phenole. Die Stabilisatoren (III) der vorliegenden Erfindung weisen mindestens eine Gruppe auf, die gegenüber dem Diol (IV) oder dem Polyol(V) reaktiv ist, beispielsweise eine Carboxyl-, Ester-, Thioester und Amidgruppe, und über die eine kovalente Bindung an das Diol (IV) oder das Polyol (V) erfolgen kann.

Bevorzugt verwendet werden als Stabilisatoren (III) sterisch gehinderte Phenole der allgemeinen Formel III.1, 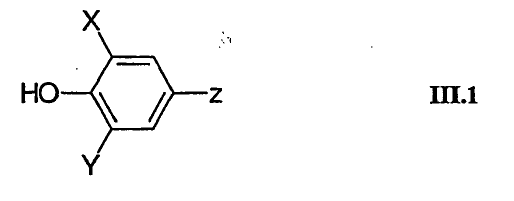 in der X und Y unabhängig voneinander Wasserstoff, geradkettige, verzweigte oder cyclische Alkylreste mit 1 bis 12 Kohlenstoffatomen bedeuten und
Z eine Carboxylgruppe bedeutet, die über eine kovalente Bindung oder einen C₁-C₁₂-Alkylenrest mit dem Phenylrest verbunden ist.

Bevorzugt eingesetzt als Stabilisator (III) wird eine Verbindung gemäß der allgemeinen Formel III.2, 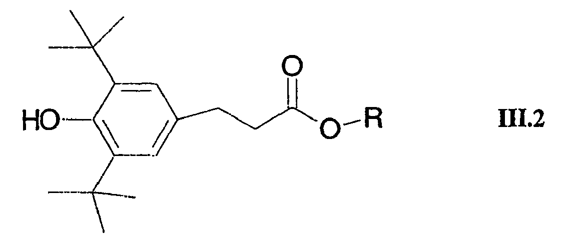 in der R ein Wasserstoffatom oder einen Alkylrest mit 1 bis 12 Kohlenstoffatomen, bevorzugt einen Methylrest-oder Ethylrest, bedeutet.

Weiterhin können als Stabilisator (III) auch Hindered Amine Light Stabilizers (HALS) der allgemeinen Formel III.3 bevorzugt verwendet werden, 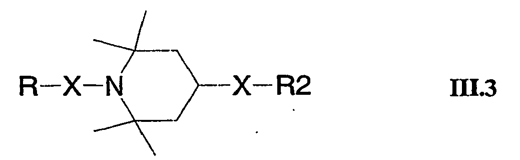 in der X eine kovalente Bindung, ein Stickstoffatom, ein Sauerstoffatom eine Amidgruppe oder eine Estergruppe ist und R und R2 unabhängig voneinander ein Wasserstoffatom oder einen Alkylrest mit 1 bis 12 Kohlenstoffatomen bedeuten, wobei mindestens einer der Reste mindestens eine funktionelle Gruppe, wie eine Carboxygruppe, Estergruppe oder eine Amidgruppe aufweist, so dass über diese funktionelle Gruppe eine Anknüpfung an das Diol (IV) oder Polyol (V) möglich ist.

Darüber hinaus können auch Mischungen von verschiedenen Stabilisatoren (III), wie beispielsweise Stabilisatoren mit phenolischen Wirkstoffgruppen und HALS-Aminen verwendet werden.

Unter Diole (IV) werden im Rahmen dieser Erfindung lineare oder verzweigte Kohlenwasserstoffe mit 2 bis 20, bevorzugt 2 bis 12 C-Atomen verstanden, die zwei funktionelle Gruppen, ausgewählt aus OH-Gruppen, bevorzugt primäre OH-Gruppen, NHR-Gruppen, wobei R ein Wasserstoffatom oder ein Alkylrest ist, SH-Gruppen oder Gemischen dieser Gruppen, aufweisen. Beispiele für Diole (IV) sind 1,2-Ethandiol, 1,3-Propandiol, 1,4-Butandiol, 1,5 Pentandiol, 1,6 Hexandiol und Diethylenglykol.

Als Polyol (V) können im Rahmen dieser Erfindung allgemein übliche Polyole, beispielsweise Polyesterole, Polycarbonatdiole, Polyetherole, Polythioetherole, Polyetheresterole und/oder Polyetherpolythioetherole, bevorzugt Polyetherole eingesetzt werden, die mindestens zwei gegenüber den UV-Absorbern (II) und Stabilisatoren (III) reaktive Gruppen, d.h. bevorzugt gegenüber Carboxylgruppen, Estergruppen und/oder Amidgruppen reaktive Gruppen aufweisen, beispielsweise Hydroxylgruppen, und/oder Aminogruppen. Die Polyole (V) können linear oder verzweigt aufgebaut sein und weisen ein bevorzugt zahlenmittleres Molekulargewicht von 75xF g/mol bis 250xF g/mol, mehr bevorzugt 100xF g/mol bis 200xF g/mol, insbesondere 100xF g/mol bis 150xF g/mol auf, wobei der Ausdruck F die Anzahl der funktionellen Gruppen im Polyol (V) darstellt. Bei der Bestimmung des Molekulargewichts des Polyols ist beispielsweise der Stickstoff oder der Sauerstoff, über den das Polyol in einer Amid- oder Esterstruktur an einen UV-Absorber (II) oder Stabilisator (III) gebunden ist, mitzuzählen. Der Begriff Polyol (V) beschreibt in dieser Anmeldung nicht ein konkretes Molekül, sondern quasi ein Polyolgemisch, das keine einheitliches Molekulargewicht aufweist, d.h. das Polyol (V) weist eine Molekulargewichtsverteilung auf, wobei das zahlenmittlere Molekulargewicht ungleich dem gewichtsmittleren Molekulargewicht ist. Bevorzugt ist hierbei das zahlenmittlere Molekulargewicht kleiner als das gewichtsmittlere Molekulargewicht, d.h. Mw/Mn > 1, mehr bevorzugt ist Mw/Mn 1,01 bis 50, stärker bevorzugt 1,1 bis 15, besonders bevorzugt ist Mw/Mn 1,1 bis 5.

Als Polyol (V) werden bevorzugt Polyetherole und Polyesterole verwendet. Besonders bevorzugt sind Polyetherole.

Geeignete Polyetherpolyole werden im allgemeinen nach bekannten Verfahren, beispielsweise durch anionische Polymerisation mit Alkalihydroxiden oder Alkalialkoholaten als Katalysatoren und unter Zusatz mindestens eines Startermoleküls, das 2 bis 8, vorzugsweise 2 bis 6, insbesondere 2 reaktive Wasserstoffatome gebunden enthält, oder durch kationische Polymerisation mit Lewis-Säuren oder Multimetall-Cyanidverbindungen als Katalysatoren aus einem oder mehreren Alkylenoxiden mit 2 bis 4 Kohlenstoffatomen im Alkylenrest hergestellt werden. Geeignete Alkylenoxide sind beispielsweise Tetrahydrofuran, 1,2- bzw. 2,3-Butylenoxid, Styroloxid und vorzugsweise Ethylenoxid und 1,2-Propylenoxid oder Tetrahydrofuran. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, Alkanolamine, mehrwertige, insbesondere zweiwertige und/oder höherwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, und Saccharose.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden.

Durch Umsetzung der UV-Absorber (II) und gegebenenfalls der Stabilisatoren (III) mit Diolen (IV) und/oder Polyolen (IV) erhält man die erfindungsgemäße Stoffmischung (I), wobei diese eine Mischung von Verbindungen mit uneinheitlichem Molekulargewicht darstellt.

Im Rahmen dieser Anmeldung umfasst der Begriff Stoffmischung (I) zwei unterschiedlich aufgebaute Verbindungstypen:
A) Der Begriff Stoffmischung (I) umfasst Verbindungen die durch Umsetzung von UV-Absorbern (II), oder einer Mischung von UV-Absorbern (II) und Stabilisatoren für thermoplastische Kunststoffe (III), mit Diolen (IV), erhältlich sind, wobei mindestens ein Teil der UV-Absorber (II) oder der Stabilisatoren (III) mindestens zwei gegenüber Diolen (IV) reaktive Gruppen aufweist. Als reaktive Gruppen sind, wie bereits vorstehend ausgeführt, im allgemeinen Carbonsäure-, Ester-, Thioester und Amidgruppen geeignet. Bevorzugt sind Estergruppen. Die Verbindung der UV-Absorber (II) und gegebenenfalls der Stabilisatoren (III) mit dem Diol (IV) kann daher durch allgemein bekannte Veresterungs-, Umesterungs und/oder Amidierungsreaktionen erfolgen.
   Vorstehend genannte Umsetzung würde zu hochmolekularen Verbindungen führen, wenn Komponenten (II) und (III) mit zwei reaktiven Gruppen und Diole (IV) stöchiometrisch umgesetzt werden. Es sind jedoch Verbindungen im Stoffgemisch wünschenswert, die ein zahlenmittleres Molekulargewicht von < 15000 g/mol, bevorzugt < 10000 g/mol, besonders bevorzugt < 3000 g/mol aufweisen, so dass eine Begrenzung des Molekulargewichts zu erfolgen hat. Dies kann beispielsweise erreicht werden durch eine Unstöchiometrie der Komponenten (II) und gegebenenfalls (III) und (IV) oder durch Zusatz von Komponenten (II) und gegebenenfalls (III), die nur eine gegenüber dem Diol (IV) reaktive Gruppe aufweisen. Wird eine Unstöchiometrie der Komponenten gewählt, um die Molmasse zu regulieren, so wird sie bevorzugt so gewählt, dass die Komponente II oder eine Mischung der Komponenten II im äquivalenten Überschuss zu der Komponente IV ist. Bevorzugt wird durch die Wahl des Verhältnisses die Anzahl an freien aliphatischen OH-Gruppen in der Stoffmischung minimiert. Weiterhin ist auch der Zusatz eines üblichen kettenregelnden Additivs, wie beispielsweise ein Monool oder ein Monoester möglich. Bevorzugte Kettenregler werden nachstehend beschrieben.
B) Der Begriff Stoffmischung (I) umfasst Verbindungen, die durch Umsetzung von UV-Absorbern (II), oder einem Gemisch von UV-Absorbern (II) und Stabilisatoren für thermoplastische Kunststoffe (III), mit einem Polyol (V), erhältlich sind, wobei das Polyol (V) bevorzugt ein zahlenmittleres Molekulargewicht von 75 F g/mol bis 250 F g/mol aufweist und F die Zahl der funktionellen Gruppen im Polyol darstellt. Auch hier kann die Bindung des UV-Absorbers (II) oder des Stabilisators (III) an das Polyol (V) beispielsweise über Estergruppen, Amidgruppen und/oder Thioestergruppen, bevorzugt Estergruppen, hergestellt werden. Vorstehend genannte Umsetzung würde zu hochmolekularen Verbindungen oder sogar Vernetzungen führen, wenn Komponenten (II) und (III) mit zwei reaktiven Gruppen und Polyole (V) stöchiometrisch umgesetzt werden. Es sind jedoch Verbindungen im Stoffgemisch wünschenswert, die ein zahlenmittleres Molekulargewicht von < 15000 g/mol, bevorzugt < 10000 g/mol, besonders bevorzugt < 3000 g/mol aufweisen, so dass eine Begrenzung des Molekulargewichts zu erfolgen hat. Dies kann beispielsweise erreicht werden durch eine Unstöchiometrie der Komponenten (II) und gegebenenfalls (III) und (V) oder durch Zusatz von Komponenten (II) und gegebenenfalls (III), die nur eine gegenüber dem Polyol (V) reaktive Gruppe aufweisen. Wird eine Unstöchiometrie der Komponenten gewählt, um die Molmasse zu regulieren, so wird sie bevorzugt so gewählt, dass die Komponente II oder eine Mischung der Komponenten II im äquivalenten Überschuss zu der Komponente V ist. Bevorzugt wird durch die Wahl des Verhältnisses die Anzahl an freien aliphatischen OH-Gruppen in der Stoffmischung minimiert. Weiterhin ist auch der Zusatz eines üblichen kettenregelnden Additivs, wie beispielsweise ein Monool oder ein Monoester möglich. Bevorzugte Kettenregler werden nachstehend beschrieben.

Ebenfalls umfasst die erfindungsgemäße Stoffmischung ein Gemisch der unter Punkt A) und Punkt B) erläuterten Verbindungstypen. Ein solches Gemisch kann auch aus den Einsatzstoffen in situ hergestellt werden.

Bevorzugt werden die Reaktionsbedingungen zur Herstellung der Stoffmischung (I) in beiden Fällen so gewählt, dass das Reaktionsprodukt möglichst wenig, bevorzugt keine, freien reaktiven, d.h. aliphatische OH-Gruppen aufweist, da diese bei der Verarbeitung in thermoplastischen Urethan mit den Isocyanat- bzw. Urethangruppen reagieren und damit zu einem Molmassenabbau des Polymers führen können. In einer bevorzugten Ausführungsform weist die Stoffmischung (I) eine aliphatische Hydroxylzahl (OHZ) von kleiner 20, bevorzugt kleiner 10, besonders bevorzugt von kleiner 5 auf, wobei aliphatische OHZ bedeutet, dass zur Bestimmung der OHZ nur aliphatische OH-Gruppen berücksichtigt werden, die freien OH-Gruppen der sterisch gehinderten Phenole jedoch nicht. In einer bevorzugten Ausführungsform liegt folglich ein Äquivalenz-Überschuss an UV-Absorber (II) und gegebenenfalls Stabilisator (III) gegenüber Diol (IV) oder Polyol (V) vor.

Zur Herstellung der Stoffmischungen (I) können UV-Absorber (II), oder ein Mischung aus UV-Absorbern (II) und Stabilisatoren (III), verwendet werden. In einer bevorzugten Ausführungsform liegt in dieser Mischung ein Gewichtsverhältnis von Absorber (II) zu Stabilisator (III) von 10 : 90 bis 99 : 1, bevorzugt von 20 : 80 bis 80 : 20 und besonders bevorzugt von 40 : 60 bis 80 : 20 vor.

Die erfindungsgemäßen Stoffmischungen (I) enthalten Verbindungen mit unterschiedlichen Molekulargewichten, d.h. diese Verbindungen liegen in Form einer Molekulargewichtsverteilung in der erfindungsgemäßen Stoffmischung (I) vor, so dass die erfindungsgemäße Stoffmischung (I) ein zahlenmittleres Molekulargewicht (Mn) zwischen 500 und 15000 g/mol, bevorzugt zwischen 600 und 10000 g/mol, besonders bevorzugt zwischen 600 und 3000 g/mol aufweist und dass das zahlenmittlere Molekulargewicht (Mn) ungleich des gewichtsmittleren Molekulargewichts (Mw) ist. Es ist bevorzugt, dass in der erfindungsgemäßen Stoffmischung das zahlenmittlere Molekulargewicht kleiner als das gewichtsmittlere Molekulargewicht ist, d.h. Mw/Mn > 1, mehr bevorzugt ist Mw/Mn 1,01 bis 50, stärker bevorzugt 1,1 bis 15, besonders bevorzugt ist Mw/Mn 1,1 bis 5.

Es ist wichtig, vorstehend beschriebene Molekulargewichtsbereiche für die erfindungsgemäße Stoffmischung einzuhalten, da in diesem Bereich eine unerwartet vorteilhafte Homogenisierung und Kompatibilisierung der Stoffmischung mit dem thermoplastischen Kunststoff erreicht werden kann. Weiterhin gewährleistet dieses Molekulargewicht ein vorteilhaftes Verhältnis von hochmolekularen schwerflüchtigen Bestandteilen und niedermolekularen Bestandteilen, welche schnell diffundieren und sich so in der Probe homogensieren können.

Die erfindungsgemäßen Stoffmischungen kristallisieren nicht, sie sind bevorzugt flüssig oder amorph. Liegen sie als Flüssigkeit vor, so weisen sie im allgemeinen eine Viskosität bei Raumtemperatur (25°C) von h = 10⁻²-10² Pas auf, bevorzugt von h = 10-¹-10¹ Pas, gemessen mit einem Rotationsviskosimeter mit Kegel-Platte Geometrie.

Die erfindungsgemäßen Stoffmischungen können in allen bekannten Kunststoffen, beispielsweise Acrylsäure-Butadien-Styrol-Copolymeren (ABS), ASA, SAN, Polyethylen, Polypropylen, EPM, EPDM, PVC, Acrylatkautschuk, Polyester, Polyoxymethylen (POM), Polyamid (PA), PC (Polycarbonat) und/oder kompakte oder zellige Polyurethanen, wie beispielsweise Weich-, Hart- und Integralschäume, Gießelastomere, RIM-Systeme und thermoplastische Polyurethane, zur Stabilisierung, bevorzugt gegen UV-Strahlung, eingesetzt werden. Außerdem sind die Stoffmischungen geeignet, allgemein organische Verbindungen zu stabilisieren, beispielsweise organische Verbindungen mit einem Molekulargewicht von 50 bis 100000 g/mol, beispielsweise Polyester, Polyether, Polyesterole, Polyetherole. Bevorzugt werden die Stoffmischungen der vorliegenden Erfindung in thermoplastischen Polyurethanen eingesetzt.

Eine Einarbeitung in die genannten Kunststoffe kann bei der Herstellung oder bei der Verarbeitung erfolgen. Weiterhin können die erfindungsgemäßen Stoffmischungen als Konzentrat verwendet werden.

Bevorzugt enthalten die Kunststoffe, insbesondere die TPUs, die erfindungsgemäßen Stoffmischungen in einer Menge von 0,01 bis 10 Gew.-%, besonders bevorzugt 0,1 bis 3 Gew.-%, insbesondere 0,2 bis 1,5 Gew.-%, jeweils bezogen auf das Gewicht des thermoplastischen Kunststoffes.

Zusätzlich zu denen erfindungsgemäßen Stabilisatoren können weitere allgemein bekannte Stabilisatoren in den Kunststoffen eingesetzt werden, beispielsweise Phosphite, Thiosynergisten, HALS-Verbindungen, UV-Absorber, Quencher, und sterisch gehinderte Phenole. Beispiele für diese bekannten Stabilisatoren sind in EP-A-698637 (Seite 6, Zeile 13 bis Seite 9, Zeile 33) beschrieben.

Verfahren zur Herstellung von Polyurethanen, insbesondere von TPUs, sind allgemein bekannt. Beispielsweise können Polyurethane, bevorzugt TPUs, durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen herstellt werden, wobei man die Umsetzung in Gegenwart der erfindungsgemäßen Inhibitoren durchführt. Unter die Komponente (e) fallen auch Hydrolyseschutzmittel wie beispielsweise polymere und niedermolekulare Carbodiimide.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b) sowie gegebenenfalls (c), (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylen-glykole. Die Polyetherole weisen den Vorteil auf, dass sie eine höhere Hydrolysestabilität als Polyesterole besitzen.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Inhibitoren weitere Stabilisatoren, z.B. gegen Hydrolyse, Licht, Hitze oder Verfärbung, anorganische und/oder organische Füllstoffe, Verstärkungsmittel und Weichmacher. In einer bevorzugten Ausführungsform fallen unter die Komponente (e) auch Hydrolyseschutzmittel wie beispielsweise polymere und niedermolekulare Carbodiimide.

Neben den genannten Komponenten a) und b) und gegebenenfalls c), d) und e) können auch Kettenregler, üblicherweise mit einem Molekulargewicht von 31 bis 499, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente c).

Nähere Angaben über die oben genannten Hilfsmittel- und Zusatzstoffe sind der Fachliteratur zu entnehmen.

Alle in dieser Schrift genannten Molekulargewichte weisen die Einheit [g/mol] auf.

Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Bevorzugt werden zur Herstellung der TPU auch Kettenverlängerer (c) verwendet.

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt.

Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert.

Die Verarbeitung der erfindungsgemäß hergestellten TPUs, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z.B. Spritzguss oder Extrusion.

Die nach den erfindungsgemäßen Verfahren herstellbaren thermoplastischen Polyurethane, bevorzugt die Folien, Formteile, Schuhsohlen, Rollen, Fasern, Verkleidungen in Automobilen, Wischerblätter, Schläuche, Kabelstecker, Faltenbälge, Schleppkabel, Kabelummantelungen, Dichtungen, Riemen oder Dämpfungselemente weisen die eingangs dargestellten Vorteile auf.

Die Erfindung soll anhand der nachstehenden Beispiele veranschaulicht werden.

### Herstellung der Stoffmischungen (I):

### Beispiel 1

50 g PTHF 250 (MW:228,51 g/mol; 0,2188 mol) wurden mit 54,76 g (4-Methoxy-Benzyliden)-malonsäurediemthylester (Sanduvor^{®} PR25) (250,25 g/mol; 0,2188 mol) sowie 50 ppm Dimethylzinndilaurat (aus 20%iger Lösung in Dioctyladipat) in einen 250-ml-Kolben gegeben. Man spülte den Kolben mit Stickstoff und erhitzte dann unter Rühren auf 170°C. Durch die Lösung wurde weiterhin Stickstoff durchgeleitet. Das entstandene Methanol wurde in einer Kühlfalle (flüssiger Stickstoff) ausgefroren. Der Umsatz wurde mittel GPC bestimmt. Er betrug nach 13 h/170°C : 98,6 %

### Beispiel 2

50 g PTHF 250 (MW:228,51 g/mol; 0,2188 mol) wurden mit 54,76 g (4-Methoxy-Benzyliden)-malonsäurediemthylester (250,25 g/mol; 0,2188 mol) und 1 g 1-(3,5-Ditert.Butyl-4-hydroxyphenyl)-propionsäuremethylester (292 g/mol; 3,4 mmol) sowie 50 ppm Dimethylzinndilaurat (aus 20%iger Lösung in DOA) in einen 250-ml-Kolben gegeben. Man spülte den Kolben mit Stickstoff und erhitzte dann unter Rühren auf 170°C. Durch die Lösung wurde weiterhin Stickstoff durchgeleitet. Das entstandene Methanol wurde einer Kühlfalle (flüssiger Stickstoff) ausgefroren (14,0 g).
Der Umsatz betrug nach 13 h/170°C : 97,9 %

### Beispiel 3

50 g PTHF 250 (MW:228,51 g/mol; 0,2188 mol) wurden mit 63,98 g (0,2188 mol) 1-(3,5-Ditert.Butyl-4-hydroxyphenyl)-propionsäuremethylester sowie 50 ppm Dimethyl-zinndilaurat (aus 20%iger Lösung in DOA) in einen 250-ml-Kolben gegeben und anschließend 6 h bei 170°C unter ständigem Stickstoffstrom umgesetzt. Im 2. Schritt wurden 27,38 g (4-Methoxy-Benzyliden)-malonsäuredimethylester (250,25 g/mol; 0,11 mol) zur Reaktionslösung gegeben und 13 h bei 170° unter Stickstoffspülung gerührt. Das entstandene Methanol wurde in einer Kühlfalle (flüssiger Stickstoff) ausgefroren
Die Umsatz betrug 16 h/170°C : 98,4 % (Bestimmung mittels GPC)

### Beispiel 4

30 g PTHF 250 (MW:228,51 g/mol; 0,1313 mol) wurden mit 71,28 g Ethyl-2-cyan-3,3-diphenylacrylat (Uvinul^{®} 3035) (277 g/mol; 0,2573 mol) und 1 g 1-(3,5-Ditert.Butyl-4-hydroxyphenyl)-propionsäuremethylester (292 g/mol; 3,4 mmol) sowie 50 ppm Dimethylzinndilaurat (aus 20%iger Lösung in DOA) in einen 250-ml-Kolben gegeben. Man spülte den Kolben mit Stickstoff und erhitzte dann unter Rühren und unter permanenter Stickstoffspülung auf 170°C. Das entstandene Methanol wurde in einer Kühlfalle (flüssiger Stickstoff) ausgefroren.
Die Umsatz betrug nach 12 h/170°C : 97,8 %

### Beispiel 5

50 g PTHF 250 (MW:226,85 g/mol; 0,2204 mol) wurden mit 52,4 g (4-Methoxy-Benzyliden)-malonsäurediemthylester (250,25 g/mol; 0,20939 mol) und 6,11 g 28 g Ethyl-2-cyan-3,3-diphenylacrylat (277 g/mol; 0,022057 mol) sowie 50 ppm Dimethylzinndilaurat (aus 20%iger Lösung in DOA) in einen 250-ml-Kolben gegeben. Man spülte den Kolben mit Stickstoff und erhitzte dann unter Rühren und Stickstoffspülung auf 170°C. Durch die Lösung wurde weiterhin Stickstoff durchgeleitet. Das entstandene Methanol wurde in einer Kühlfalle (flüssiger Stickstoff) ausgefroren.
Der Umsatz betrug nach 13 h/170°C : 98,7 %

### Beispiel 6

40 g Ethyl-3(3-(2H-benzotriazol-2-yl)-5-tert.butyl-4-hydroxyphenylpropionat (108,8 mmol) wurden mit 11,2 g (54,4 mmol) Polyethyleneglykol sowie 100 ppm Dimethylzinndilaurat (aus 20%iger Lösung in DOA) in einen 100-ml-Kolben gegeben und anschließend 7 h bei 140°C unter ständigem Stickstoffstrom umgesetzt. Das entstandene Ethanol wurde in einer Kühlfalle (flüssiger Stickstoff) ausgefroren.
Der Umsatz betrug nach 7 h / 94 %

### Beispiel 7

50 g Pluriol^{®} E 200 (MW:201,83 g/mol; 0,2477mol) wurden mit 61,99 g (4-Methoxy-Benzyliden)-malonsäuredimethylester (250,25 g/mol; 0,2477 mol) in einen 250-ml-Kolben gegeben. Unter Rühren und Stickstoffspülung wurde das Gemisch auf 160°C aufgeheizt. Das während der Reaktion entstandene Methanol wurde in einer Kühlfalle ausgefroren.
Der Umsatz betrug nach 6 h/160°C : 99,2 %

### Beispiel 8

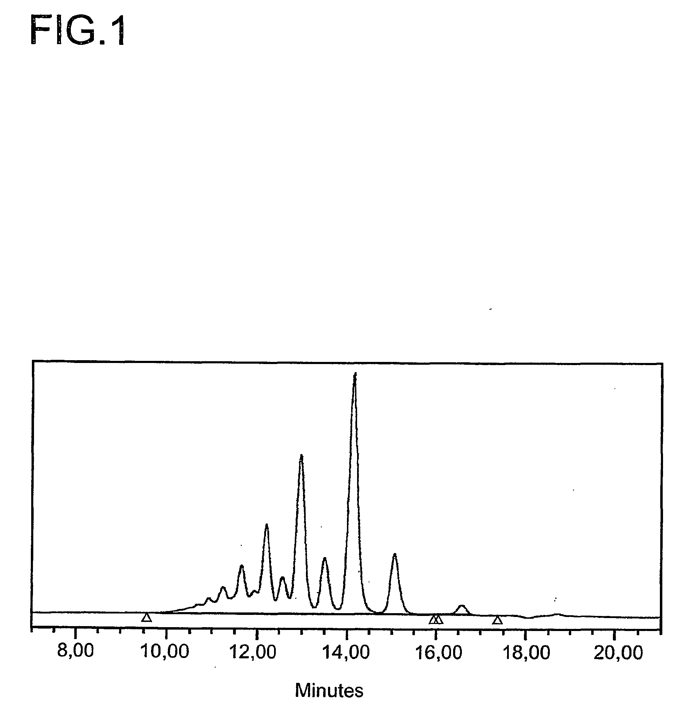

11,81 g 1,6 Hexandiol (MW:118,18 g/mol; 0,0999 mol) wurden mit 25 g Sanduvor^{®} PR 25 (205,25 g/mol; 0,0999 mol) und 50 ppm Dimethylzinndilaurat in einen 250-ml-Kolben gegeben. Unter Rühren und Stickstoffspülung wurde das Gemisch auf 170°C hochgeheizt. Das entstandene Methanol wurde in einer Kühlfalle (mit flüssigem Stickstoff) ausgefroren.
Der Umsatz betrug nach 13 h/170°C : 98,6 %
Figur 1 zeigt das Ergebnis einer Size Exlclusion Chromatography Untersuchung der erfindungsgemäßen Verbindung. Es wird deutlich, dass es sich hierbei um ein Gemisch aus verschiedenen Einzelverbindungen handelt.

### Beispiel 9

25 g Pluriol^{®} E 200 (MW:201,83 g/mol; 0,1239 mol) wurden mit 68,62 g Ethyl-2-cyan-3,3-diphenylacrylat (277 g/mol; 0,2477 mol) und 0,047 g Kaliummethylat (500 ppm) in einen 250-ml-Kolben gegeben. Unter Rühren und Stickstoffspülung wurde das Gemisch auf 160°C aufgeheizt. Das entstandene Ethanol wurde in einer Kühlfalle (mit flüssigem Stickstoff) ausgefroren.
Der Umsatz betrug nach 7 h/160°C . 94,3 %

### Herstellung von mit Stoffmischungen (I) stabilisiertem TPU

### Beispiel 10

1000 g PTHF 1000 wurden bei 45°C in einem 2-1-Rundkolben aufgeschmolzen. Anschließend erfolgte unter Rühren die Zugabe von 8 g Irganox^{®} 1010 und 8 g Irganox^{®} 1098 sowie von 125 g Butandiol. Aus Tabelle 1 gehen Menge und Art der zusätzlich dosierten UV- Absorber hervor. Nach der Erwärmung der Lösung wurde unter Rühren in einem 2-1-Weißbleicheimer auf 80°C wurden anschließend 600 g 4,4'-MDI zugegeben und gerührt, bis die Lösung homogen war. Anschließend goss man das TPU in eine flache Schale, in der das Produkt bei 24 h bei 100°C im Heizschrank getempert wurde.

**Tabelle 1:**

| Beispiel | UV- Absorber | Menge |
|---|---|---|
| 10-1 (Vergleich) | - | - |
| 10-2 | Beispiel 1 | 8 g |
| 10-3 | Beispiel 3 | 8 g |
| 10-4 | Beispiel 4 | 8 g |
| 10-5 | Beispiel 6 | 8 g |
| 10-6 (Vergleich) | Uvinul^{®} 3030 | 8 g |

### UV Stabilisierungswirkung durch die neuen Stabilisatoren

### Beispiel 11

Die thermoplastischen Polyurethane aus Beispiel 10 wurden nach DIN 75202 bewittert. Tabelle 2 zeigt die Entwicklung des Yellowness-Index bei Bewitterung. Im Vergleich zu der Probe 10-1 zeigen alle mit UV-Absorbern ausgestatteten Proben eine geringere Vergilbung

**Tabelle 2:**

| Versuchs-Nr. | Yellowness-Index YI | | | |
|---|---|---|---|---|
| | 0 - Probe | 150 h | 300 h | 500 h |
| 10.1 | 14,52 | 32,2 | 49,3 | 60,73 |
| 10.2 | 6,62 | 22,57 | 38,8 | 49,9 |
| 10.3 | 3,34 | 13,89 | 30,48 | 39,43 |
| 10.4 | 6,22 | 20,86 | 31,72 | 44,29 |
| 10.5 | 9,97 | 17,08 | 26,4 | 33,09 |

### Synthese eines Stabilisatorkonzentrates

### Beispiel 12

Ein Konzentrat basierend auf einem Polyether TPU Elastollan^{®} 1185 A mit dem Stabilisator aus Beispiel 6 hergestellt. Dieser enthält keine freien Hydroxylgruppen. Hierzu wurden 54 g Polyether TPU bei anfänglich 200°C in einem Batch-Kneter aufgeschmolzen. Zu der Schmelze wurden innerhalb von 25 Minuten 6 g UV-Absorber aus Beispiel 6 zudosiert. Die Viskosität der Schmelze sank daraufhin nicht so deutlich wie beim vorhergehenden Beispiel, so dass die Temperatur des Kneters nur bis auf 170°C zurückgenommen werden musste, um eine Einarbeitung zu ermöglichen.

Die Analyse der Molmasse des Konzentrates mittels GPC ergab eine gewichtsmittlere Molmasse von M_{w} = 79000 g/mol.

Zum Vergleich wurde ein Konzentrat basierend auf einem Polyether TPU Elastollan^{®} 1185 A wurde mit einem kommerziellen UV-Absorber, Tinuvin^{®} 1130, hergestellt. Hierzu wurden 54 g Polyether TPU bei anfänglich 200°C in einem Batch-Kneter aufgeschmolzen. Zu der Schmelze wurden innerhalb von 35 Minuten 6 g Tinuvin 1130 zudosiert. Die Viskosität der Schmelze sank daraufhin deutlich, so dass die Temperatur des Kneters bis auf 140°C zurückgenommen werden musste, um ein einarbeiten des Tinuvin^{®} 1130 zu ermöglichen. Die Analyse der Molmasse des Konzentrates mittels GPC ergab eine gewichtsmittlere Molmasse von M_{w} = 46000 g/mol.

Dieses Beispiel zeigt, dass die erfindungsgemäßen UV-Absorber besser zu Konzentraten verarbeitet werden können als vergleichbare kommerzielle UV-Absorber, welche zu einem deutlichen Abbau der Molmasse und damit zu einem Eigenschaftsverlust des Produktes führen.

### Ausblühung eines kommerziellen Oligomeren UV-Absorbers

### Beispiel 13

Eine 2 mm starke spritzgegossene Platte aus TPU Beispiel 10-4 unter gleichen Bedingungen getempert. Aufgrund der guten Kompatibilität des Stabilisators bildete sich selbst nach 4 Wochen noch kein Belag. Zum Vergleich wurde eine spritzgegossene 2 mm starke Platte aus TPU Vergleichsbeispiel 10-6 wurde bei 80°C in einem Heizschrank getempert. Schon nach einem Tag blühte der eingesetzte Stabilisator in Form eines weißen Belages aus.

### Flüchtigkeit

### Beispiel 14

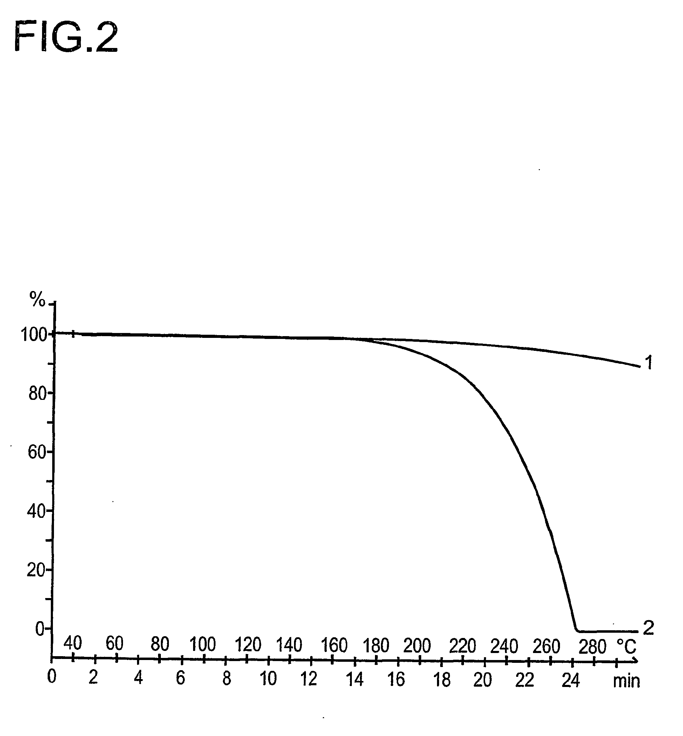

(4-Methoxy-Benzyliden)-malonsäuredimethylester (Sandofor^{®} PR25) und der Stabilisator aus Beispiel 2 wurde mittels Thermogravimetrie auf Flüchtigkeit hin untersucht. Der Versuch wurde mit einer Aufheizrate von 10 K/min und unter Inertgas durchgeführt. Das Ergebnis ist in Figur 2 veranschaulicht. Figur 2 zeigt deutlich, dass die Flüchtigkeit des Stabilisators aus Beispiel 2 (Linie 1) deutlich niedriger ist als die Flüchtigkeit des kommerziellen Produktes (Linie 2).

## Patentansprüche

1. Stoffmischung (I) mit einem zahlenmittleren Molekulargewicht zwischen 500 und 15000 g/mol, wobei das zahlenmittlere Molekulargewicht ungleich des gewichtsmittleren Molekulargewichts ist, erhältlich durch
A) Umsetzung von UV-Absorbern (II), oder einer Mischung von UV-Absorbern (II) und Stabilisatoren (III) für Kunststoffe, mit Diolen (IV), wobei mindestens ein Teil der UV-Absorber (II) oder der Stabilisatoren (III) mindestens zwei gegenüber Diolen reaktive Gruppen aufweist,
oder
B) Umsetzung von UV-Absorbern (II), oder einer Mischung von UV-Absorbern (II) und Stabilisatoren (III) für Kunststoffe, mit einem Polyol (V), wobei das Umsetzungsverhältnis der Umsetzung A) oder B) so gewählt wird, dass die Stoffmischung (I) eine aliphatische Hydroxylzahl von kleiner 20 aufweist.

2. Stoffmischung nach Anspruch 1, erhältlich durch Umsetzung A) und Umsetzung B).

3. Stoffmischung nach Anspruch 1 oder 2, **dadurch gekennzeichnet, dass** man einen UV-Absorber gemäß den Formeln II.1, II.2, II.3 oder einem Gemisch davon verwendet, 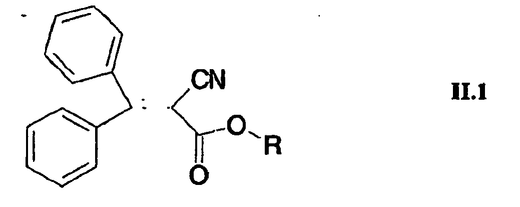 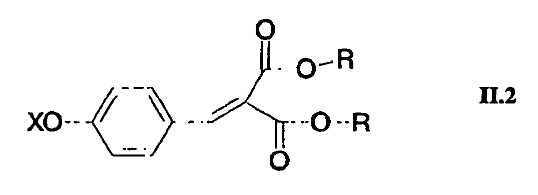 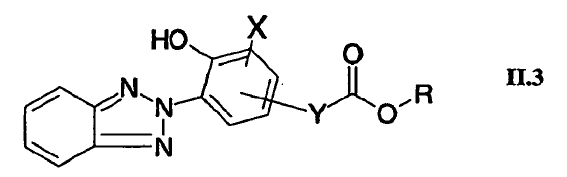 in denen X ein Wasserstoffatom, einen linearen oder verzweigten C₁-C₂₀-Alkylrest, einen C₅-C₁₂-Cycloalkylrest, gegebenenfalls mono-, di- oder trisubstituiert mit einem C₁-C₂₀-Alkylrest oder Phenylalkylrest, oder ein gehindertes Amin bedeutet,
R ein Wasserstoffatom, einen linearen oder verzweigten C₁-C₁₀-Alkylrest, bevorzugt C₁-C₂-Alkylrest, C₁-C₁₀-Alkoxyalkylrest oder C₁-C₁₀-Alkenylrest bedeutet und Y eine kovalente Bindung oder ein linearer oder verzweigter C₁-C₁₂-Alkylenrest ist.

4. Stoffmischung nach einem der Ansprüche 1 bis 3, **dadurch gekennzeichnet, dass** man als Stabilisator sterisch gehinderte Phenole der allgemeinen Formel III.1 oder III.3 verwendet, 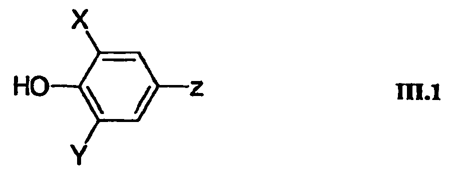 in der X und Y unabhängig voneinander Wasserstoff, geradkettige, verzweigte oder cyclische Alkylreste mit 1 bis 12 Kohlenstoffatomen und Z mindestens eine über einen C₁-C₁₂-Alkylenrest mit dem Phenolrest verbundene Carboxylgruppe bedeutet, und 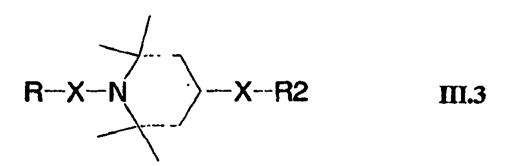 in der X eine kovalente Bindung, ein Stickstoffatom, ein Sauerstoffatom eine Amidgruppe oder eine Estergruppe ist und R und R2 unabhängig voneinander ein Wasserstoffatom oder einen Alkylrest mit 1 bis 12 Kohlenstoffatomen bedeuten, wobei mindestens einer der Reste mindestens eine funktionelle Gruppe, wie eine Carboxygruppe, Estergruppe oder eine Amidgruppe aufweist, so dass über diese funktionelle Gruppe eine Anknüpfung an das Diol (IV) oder Polyol (V) möglich ist.

5. Verfahren zur Herstellung einer Stoffmischung nach Anspruch 1, **dadurch gekennzeichnet, dass** man W-Absorber (II), oder eine Mischung von UV-Absorbern (II) und Stabilisatoren (III), mit Diolen (IV), umsetzt, wobei mindestens ein Teil der UV-Absorber (II) oder der Stabilisatoren (III) mindestens zwei gegenüber Diolen (IV) reaktive Gruppen aufweist.

6. Verfahren zur Herstellung einer Stoffmischung nach Anspruch 1, **dadurch gekennzeichnet, dass** man UV-Absorber (II), oder eine Mischung von UV-Absorbern (II) und Stabilisatoren (III), mit einem Polyol (V) umsetzt.

7. Verwendung der Stoffmischung nach einem der Ansprüche 1 bis 4 zur UV-Stabilisierung von Kunststoffen.

8. Verfahren zur Herstellung von Polyurethanen durch Umsetzung von Polyisocyanaten mit gegenüber Isocyanaten reaktiven Verbindungen, **dadurch gekennzeichnet, dass** zur Stabilisierung eine Stoffmischung gemäß einem der Ansprüche 1 bis 4 eingesetzt wird.

9. Polyurethane, erhältlich nach einem Verfahren gemäß Anspruch 8.

## Claims

1. A substance mixture (I) with a number-average molar mass of from 500 to 15 000 g/mol, where the number-average molar mass is not identical with the weight-average molar mass, obtainable by
A) reacting UV absorbers (II), or a mixture of UV absorbers (II) and stabilizers (III) for plastics, with diols (IV), where at least some of the UV absorbers (II) or of the stabilizers (III) have at least two groups reactive toward diols,
or
B) reacting UV absorbers (II), or a mixture of UV absorbers (II) and stabilizers (III) for plastics, with a polyol (V), where the reaction conditions for reaction A) or B) are selected so as to give the substance mixture (I) an aliphatic hydroxyl value below 20.

2. The substance mixture according to claim 1, obtainable by reaction A) or reaction B).

3. The substance mixture as claimed in claim 1 or 2, wherein use is made of a UV absorber of the formula II.1, II.2, or II.3, or of a mixture of these, 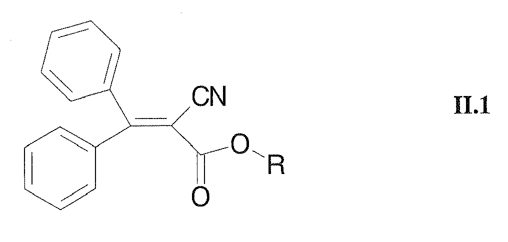 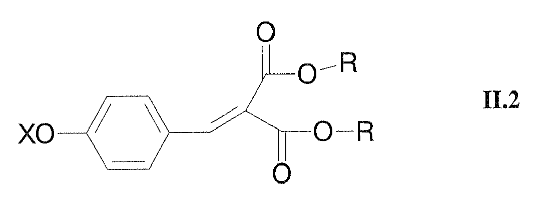 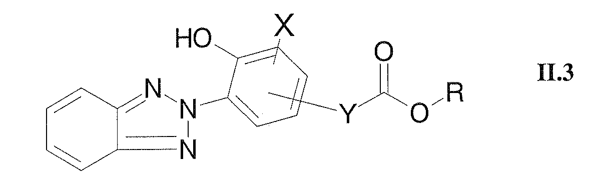 where X is a hydrogen atom, a linear or branched C₁-C₂₀-alkyl radical, a C₅-C₁₂-cycloalkyl radical, optionally mono-, di-, or trisubstituted with a C₁-C₂₀-alkyl radical or phenylalkyl radical, or is a hindered amine,
R is a hydrogen atom, a linear or branched C₁-C₁₀-alkyl radical, preferably C₁-C₂-alkyl radical, or a C₁-C₁₀-alkoxyalkyl radical, or a C₁-C₁₀-alkenyl radical, and Y is a covalent bond or a linear or branched C₁-C₁₂-alkylene radical.

4. The substance mixture as claimed in any of claims 1 to 3, wherein the stabilizer used comprises sterically hindered phenols of the formula III.1 or III.3, 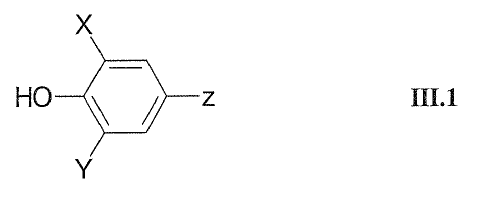 where X and Y, independently of one another, are hydrogen, or straight-chain, branched, or cyclic alkyl radicals having from 1 to 12 carbon atoms, and Z is at least one carboxy group bonded via a C₁-C₁₂-alkylene radical to the phenol radical, or 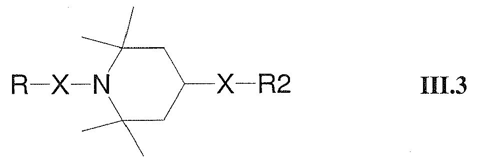 where X is a covalent bond, a nitrogen atom, an oxygen atom, an amide gorup, or an ester group, and R and R2, independently of one another, are a hydrogen atom or an alkyl radical having from 1 to 12 carbon atoms, where at least one of the radicals has at least one functional group, such as a carboxy group, ester group, or an amide group, so that linkage to the diol (IV) or polyol (V) is possible via this functional group.

5. A process for preparing a substance mixture as claimed in claim 1, which comprises reacting UV absorbers (II), or a mixture of UV absorbers (II) and stabilizers (III), with diols (IV), where at least some of the UV absorbers (II) or of the stabilizers (III) have at least two groups reactive toward diols (IV).

6. A process for preparing a substance mixture as claimed in claim 1, wherein UV absorbers (II), or a mixture of UV absorbers (II) and stabilizers (III), are reacted with a polyol (V).

7. The use of the substance mixture as claimed in any of claims 1 to 4 for the UV-stabilization of plastics.

8. A process for preparing polyurethanes by reacting polyisocyanates with compounds reactive toward isocyanates, which comprises using, for the stabilization, a substance mixture as claimed in any of claims 1 to 4.

9. A polyurethane obtainable by a process as claimed in claim 8.

## Revendications

1. Mélange de substances (I) avec un poids moléculaire en moyenne arithmétique entre 500 et 15 000 g/mol, le poids moléculaire en moyenne arithmétique étant différent du poids moléculaire en moyenne pondérale, obtenu par
A) mise en réaction d'absorbeurs d'UV (II) ou d'un mélange d'absorbeurs d'UV (II) et de stabilisateurs (III) pour les plastiques avec des diols (IV), au moins une partie des absorbeurs d'UV (II) ou des stabilisateurs (III) présentant au moins deux groupes réactifs par rapport aux diols,
ou
B) mise en réaction d'absorbeurs d'UV (II) ou d'un mélange d'absorbeurs d'UV (II) et de stabilisateurs (III) pour des plastiques avec un polyol (V), la proportion de réaction de la réaction A) ou B) étant sélectionnée de telle sorte que le mélange de substances (I) présente un indice hydroxyle aliphatique inférieur à 20.

2. Mélange de substances selon la revendication 1, obtenu par la réaction A) et la réaction B).

3. Mélange de substances selon la revendication 1 ou 2, **caractérisé en ce que** l'on utilise un absorbeur d'UV selon les formules II.1, II.2, II.3 ou un mélange de ceux-ci 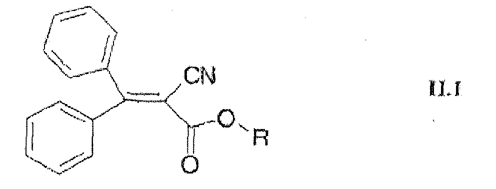 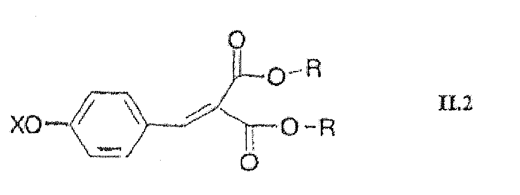 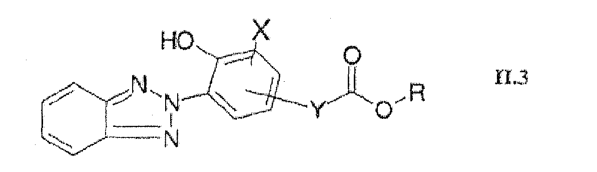 dans lesquelles X est un atome d'hydrogène, un radical C₁-C₂₀-alkyle linéaire ou ramifié, un radical C₅-C₁₂-cycloalkyle, éventuellement mono-, di- ou trisubstitué avec un radical C₁-C₂₀-alkyle ou un radical phénylalkyle, ou une amine encombrée,
R est un atome d'hydrogène, un radical C₁-C₁₀-alkyle linéaire ou ramifié, de préférence un radical C₁-C₂-alkyle, un radical C₁-C₁₀-alcoxyalkyle ou un radical C₁-C₁₀-alcényle et Y est une liaison covalente ou un radical C₁-C₁₂-alkylène linéaire ou ramifié.

4. Mélange de substances selon l'une des revendications 1 à 3, **caractérisé en ce que** l'on utilise comme stabilisateur des phénols stériquement encombrés de formule générale III.1 ou III.3, 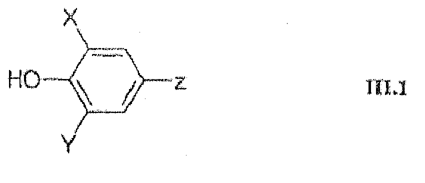 dans laquelle X et Y désignent, indépendamment l'un de l'autre, l'hydrogène, des radicaux alkyle cycliques, à chaîne droite ou ramifiée avec 1 à 12 atomes de carbone et Z au moins un groupe carboxyle lié par l'intermédiaire d'un radical C₁-C₁₂-alkylène avec le radical phénol, et 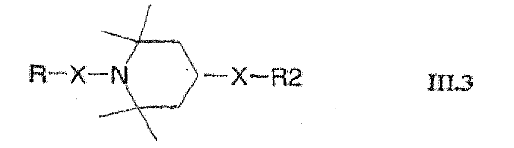 dans laquelle X est une liaison covalente, un atome d'azote, un atome d'oxygène, un groupe amide ou un groupe ester et R et R2 désignent, indépendamment l'un de l'autre, un atome d'hydrogène ou un radical alkyle avec 1 à 12 atomes de carbone, au moins un des radicaux présentant au moins un groupe fonctionnel, comme un groupe carboxy, un groupe ester ou un groupe amide de telle sorte qu'une liaison au diol (IV) ou au polyol (V) soit possible par l'intermédiaire de ce groupe fonctionnel.

5. Procédé de préparation d'un mélange de substances selon la revendication 1, **caractérisé en ce que** l'on met en réaction des absorbeurs d' UV (II) ou un mélange d'absorbeurs d'UV (II) et de stabilisateurs (III) avec des diols (IV), au moins une partie des absorbeurs d' UV (II) ou des stabilisateurs (III) présentant au moins deux groupes réactifs aux diols (IV).

6. Procédé de préparation d'un mélange de substances selon la revendication 1, **caractérisé en ce que** l'on met en réaction des absorbeurs d'UV (II) ou un mélange d'absorbeurs d'UV (II) et de stabilisateurs (III) avec un polyol (V).

7. Utilisation du mélange de substances selon l'une des revendications 1 à 4 en vue de la stabilisation aux UV de plastiques.

8. Procédé de préparation de polyuréthannes par mise en réaction de polyisocyanates avec des composés réactifs aux isocyanates, **caractérisé en ce qu'**un mélange de substances selon l'une des revendications 1 à 4 est utilisé pour la stabilisation.

9. Polyuréthannes obtenus par un procédé selon la revendication 8.
